# EUROPÄISCHE PATENTSCHRIFT

(11) **EP 0 501 242 B1**
(45) Veröffentlichungstag und Bekanntmachung des Hinweises auf die Patenterteilung: **13.12.1995**
(21) Anmeldenummer: 92102420.4
(22) Anmeldetag: 13.02.1992
(51) Int. Cl.: G01M 15/00, G01N 1/22

(54) **Verfahren zur Durchflussbestimmung von Abgasen**
Method for determining the flow of exhaust gases
Procédé de détermination du débit de gaz d'échappement

(30) Priorität: 25.02.1991 DE 9102208 U
(43) Veröffentlichungstag der Anmeldung: 02.09.1992
(73) Patentinhaber: SIEMENS AKTIENGESELLSCHAFT, 80333 München (DE)
(72) Erfinder: Decker, Hans-Josef, W-3003 Ronnenberg-Empelde (DE); Horn, Horst, W-3257 Springe 1 (DE); van Damme, Sylvain, W-7500 Karlsruhe 21 (DE)

(56) Entgegenhaltungen:
- AT-B- 391 556
- DE-A- 2 445 444
- DE-A- 3 800 219
- US-A- 4 660 408

## Beschreibung

### Verfahren zur Durchflußbestimmung von Abgasen

Für das in vielen Ländern gesetzlich vorgeschriebene Zertifizierungsverfahren von Kraftfahrzeugen wird die Schadstoffkonzentration in den Abgasen dadurch gemessen, daß eine vorher festgelegte Gasmenge, die aus Motorenabgas und Zuluft besteht, als Probe entnommen und deren Zusammensetzung gemessen wird. Dabei ändern sich die Verhältnisse zwischen Abgas und Zuluft ständig, da der Fahrzyklus vom Motor Beschleunigung, Verzögerung usw. erfordert, die zu unterschiedlichen Abgas/Zuluft-Verhältnissen führen. Es wurde bisher in der Regel mit einer mittleren Verdünnungsrate gearbeitet, so daß man zwangsläufig nur einen integralen Wert hatte und das momentane Ergebnis, z. B. in den Beschleunigungsphasen, nicht erkennen konnte. Unrichtige Aussagen über die tatsächlichen Verhältnisse waren daher nicht ausgeschlossen.

In der DE-OS 38 00 219 ist eine Vorrichtung zur Volumenbestimmung von Autoabgasen mit einem nach der Karmann'schen Wirbelstraßen-Prinzip arbeitenden Durchflußmessung sowie mit einem Druck- und Temperatursensor beschrieben. Aus den drei Größen Durchfluß, Druck und Temperatur wird ein Norm-Abgasvolumen errechnet. Durchflußmesser nach dem Wirbelstraßen-Prinzip haben einen Meßbereich von ca. 1 : 25, bei Autoabgasmessungen treten jedoch Durchflüsse in einem wesentlich größeren Bereich auf, beispielsweise von 1 bis 100 l/sec.

Aus der US-Patentschrift 4 660 408, gegen die der Patentanspruch 1 abgegrenzt ist, ist eine Vorrichtung zum Messen des Anteils an Feststoffpartikeln und gasförmigen Komponenten des Abgases eines Verbrennungsmotors bekannt. Durch Mischen des Abgases mit Umgebungsluft wird ein erstes Mischgas gebildet, das von einer Pumpe durch eine Venturi-Düse gesaugt wird, so daß der Strom des Mischgases konstant ist. Der Anteil des Abgases in diesem Mischgas ist nur dann konstant, wenn auch der Abgasstrom konstant ist. Dem Mischgas wird eine Probe entnommen und mit Reinluft verdünnt, und zwar im Verhältnis drei Teile Mischgas zu einem Teil Abgas. Der Mischgas- und der Reinluftstrom werden geregelt, wozu ihre Massendurchflüsse erfaßt werden. Das Problem der unterschiedlich großen Durchflüsse von Abgasen, die beim Testen von Kraftfahrzeugmotoren unterschiedlicher Größe und mit verschiedenen Drehzahlen auftreten, sind nicht angesprochen.

Der vorliegenden Erfindung liegt die Aufgabe zugrunde, ein Verfahren zur Durchflußbestimmung von Abgasen, insbesondere von Abgasen von Kraftfahrzeugmotoren, zu schaffen, mit welchem der Durchfluß des Abgases und damit das Abgasvolumen in einem großen Meßbereich mit hoher Genauigkeit erfaßt wird.

Diese Aufgabe wird mit den in den Patentansprüchen angegebenen Maßnahmen gelöst.

Dem Abgas wird Grundluft mit einem Durchfluß zugesetzt, der mit dem den Durchfluß des Gasgemisches erfassenden Durchflußmesser noch gemessen werden kann.

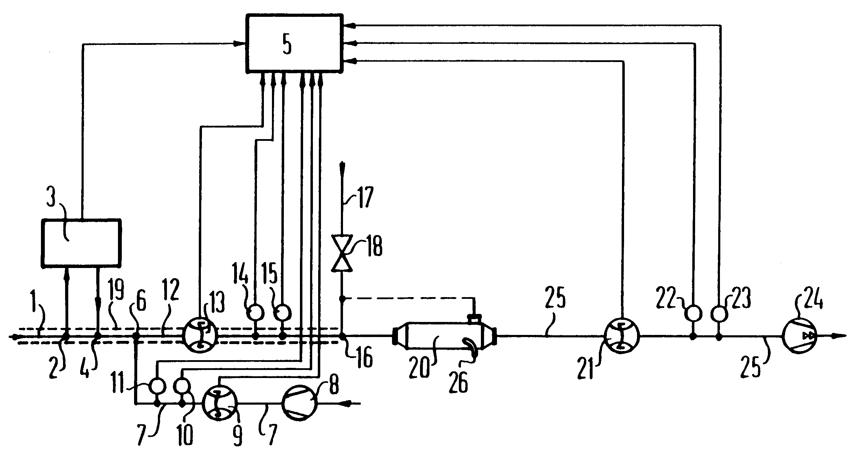

Anhand der Zeichnung, in der ein Ausführungsbeispiel der Erfindung veranschaulicht ist, werden im folgenden Ausgestaltungen, Ergänzungen und Vorteile der Erfindung näher beschrieben und erläutert.

Einer Abgasleitung 1 wird das zu analysierende Abgas zugeführt. An einer Stelle 2 wird aus der Abgasleitung 1 Abgas entnommen und einem Analysengerät 3, z. B. einem Spektrometer, zugeführt, mit welchem die verschiedenen Komponenten des Abgases und deren relativer Anteil ermittelt wird. Das Meßergebnis wird einem Rechner 5 zugeführt. Das analysierte Abgas wird an einer Stelle 4 in die Abgasleitung 1 zurückgespeist.

Zur Absolutwertbestimmung der einzelnen Komponenten muß das Volumen bzw. Gewicht des durchfließenden Abgases bestimmt werden. Im weiteren Verlauf der Leitung 1 wird daher an einer Stelle 6 durch eine Grundluftleitung 7 Umgebungsluft eingespeist, die von einem Kompressor 8 angesaugt und deren Durchfluß mit einer Durchflußmeßanordnung, bestehend aus einem Durchflußmesser 9, einem Temperatursensor 10 und einem Drucksensor 11, gemessen wird. Die drei Werte für Durchfluß, Druck und Temperatur werden dem Rechner 5 zugeführt, der daraus einen Normdurchfluß berechnet, das ist das je Zeiteinheit durchfließende Volumen der Grundluft bei einer bestimmten Temperatur und einem bestimmten Druck. Anstelle des Normvolumens kann auch das Gewicht je Zeiteinheit ermittelt werden.

Das an der Stelle 6 gebildete Gemisch aus Abgas und Umgebungsluft wird durch eine erste Mischgasleitung 12 geführt, die sich an die unverdünntes Abgas enthaltende Abgasleitung 1 anschließt. In der ersten Mischgasleitung 12 ist eine zweite Durchflußmeßanordnung, bestehend aus einem Durchflußmesser 13, einem Temperaturmesser 14 und einem Druckmesser 15, angeordnet, die dem Durchfluß, dem Druck und der Temperatur des Mischgases entsprechende elektrische Signale an den Rechner 5 liefert, der daraus die die Leitung 12 in der Zeiteinheit durchfließende Mischgasmenge errechnet.

Die erste Mischgasleitung endet an einer Stelle 16, an der eine Belüftungsleitung 17 mündet, über die während der Abgasmessung Umgebungsluft angesaugt wird, damit unter allen Betriebsbedingungen des Motors, dessen Abgas analysiert wird, an der Stelle 16 und damit auch am Eingang der Abgasleitung 1 etwa der Druck der Umgebungsluft herrscht. Ein unzulässiger Druckanstieg am Auspuff wird damit verhindert. Das nur wenig verdünnte Abgas aus der ersten Mischgasleitung 12 und die Umgebungsluft aus der Belüftungsleitung 17 werden an der Stelle 16 vermischt, so daß das Abgas in einer auf die erste Mischgasleitung 12 folgenden zweiten Mischgasleitung 25 weiter verdünnt ist. In der Belüftungsleitung 17 liegt ein Absperrventil 18, dessen Bedeutung weiter unten erläutert wird.

Die Abgasleitung 1 und die erste Mischgasleitung 12 sind mit einer Heizung 19 versehen, damit sich dort kein Kondensat niederschlägt. In der zweiten Mischgasleitung 25 ist das Abgas so stark verdünnt, daß sich kein Kondensat mehr bilden kann und ein Beheizen nicht mehr erforderlich ist.

Soll auch der Partikelausstoß von Dieselmotoren gemessen werden können, kann, wie gestrichelt angedeutet, in die zweite Mischgasleitung 25 ein sogenannter Verdünnungstunnel 20 eingebaut sein. Hat dieser, wie in der Figur angedeutet, einen Anschluß für die Verdünnungsluft, kann, wie ebenfalls mit einer gestrichelten Linie veranschaulicht, die Belüftungsleitung 17 mit diesem Anschluß verbunden werden. Die Verbindung zur Stelle 16 entfällt dann. Der Verdünnungstunnel 20 enthält eine Sonde zur Entnahme von Abgas, aus dem die Partikel gefiltert und gewogen werden können. In der zweiten Mischgasleitung 25 befindet sich eine dritte Durchflußmeßanordnung mit einem Durchflußmesser 21, einem Temperaturmesser 22 und einem Druckmesser 23. Aus deren Ausgangssignalen ermittelt wieder der Rechner 5 die je Zeiteinheit durchfließende Gasmenge. Schließlich befindet sich am Ende der zweiten Mischgasleitung 25 eine Vakuumpumpe 24, die dafür sorgt, daß auch bei großem Abgasdurchfluß am Eingang der Abgasleitung 1, also bei hoher Drehzahl und Belastung des zu prüfenden Motors, kein für die Abgasmessung unzulässiger Druckanstieg auftritt.

Im folgenden wird die Funktion des Ausführungsbeispiels beschrieben. Die Durchflußmesser arbeiten nach dem sogenannten Karmann'schen Wirbelstraßen-Prinzip und haben demgemäß einen Meßbereich bis zu ca. 1 : 25. Die geforderten Meßbereiche sind jedoch größer, wenn Abgasmessungen an Kleinwagenmotoren im Leerlauf und großvolumigen Motoren mit hohen Drehzahlen gleichermaßen mit derselben Einrichtung durchgeführt werden sollen. Das Ausführungsbeispiel soll einen Meßbereich von 1 bis 180 l/sec haben. Es wird daher für den Durchflußmesser 13 ein Gerät mit einem Meßbereich von 8 bis 200 l/sec gewählt. Der Durchfluß durch die Grundluftleitung 7 wird so eingestellt, daß beim kleinsten zu messenden Abgasdurchfluß, im Beispiel 1 l/sec, der Durchfluß durch den Durchflußmesser 13 etwa gleich der unteren Meßbereichsgrenze, im Beispiel 8 l/sec, ist. Der Grundluft-Durchfluß muß daher im Beispiel mindestens 7 l/sec sein. Zweckmäßig ist er etwas höher, damit im Falle von Schwankungen bei dem kleinsten zu messenden Abgasdurchfluß die untere Meßbereichsgrenze des Durchflußmessers 13 von 8 l/sec nicht unterschritten wird. Ein unnötig hoher Grundluft-Durchfluß ist unerwünscht, da er die Meßgenauigkeit beeinträchtigt. Der tatsächliche Abgasdurchfluß wird nämlich durch Bilden der Differenz zwischen Mischgas und Grundfluß-Durchfluß ermittelt. Ein höherer Grundluft-Durchfluß wird mit einem größeren Absolutfehler gemessen, der sich dann als großer Relativfehler auf den durch Differenzbildung ermittelten Abgasdurchfluß auswirkt. Wird, wie im Ausführungsbeispiel, der Grundluft-Durchfluß gemessen, braucht dieser nicht konstantgehalten zu werden. Der Durchflußmesser 9 kann, wie es beim Durchflußmesser 13 der Fall ist, nach dem Karmann'schen Wirbelstraßen-Prinzip arbeiten. Er hat jedoch einen anderen Meßbereich, der auf den gewünschten Grundluft-Durchfluß abgestimmt ist. Beispielsweise liegt sein Meßbereich zwischen 4 und 12 l/sec. Auf den Grundluft-Durchflußmesser 9 kann verzichtet werden, wenn der Grundluft-Durchfluß auf andere Weise bestimmt werden kann bzw. auf einen konstanten bekannten Wert eingestellt wird, z. B. dadurch, daß eine sogenannte "kritische" Venturi-Düse in die Grundluftleitung eingesetzt ist oder der Kompressor 8 die Grundluft auf einen konstanten Druck bringt, die dann ein Ventil oder eine Düse durchströmt. Der Grundluft-Durchfluß kann in diesem Fall mit der Durchflußmeßanordnung 13, 14, 15 gemessen werden, indem die Abgasleitung 1 gesperrt wird. In gleicher Weise können beim Ausführungsbeispiel die Durchflußmesser 9 und 13 durch gegenseitigen Vergleich überprüft werden. Eine solche Überprüfung ist jedoch nur innerhalb des Meßbereichs des Durchflußmessers 9, also im unteren Teil des Meßbereichs des Durchflußmessers 13, möglich. Zur Prüfung des Durchflußmessers 13 im oberen Teil des Meßbereichs wird das Ventil 18 in der Belüftungsleitung 17 geschlossen, und es werden die Meßwerte der Durchflußmesser 13, 21 miteinander verglichen. Die Durchflußmesser, die miteinander verglichen werden, sind zweckmäßig unterschiedlich, z. B. von verschiedenen Herstellern, damit möglichst keine gleichwirkenden systematischen Fehler auftreten.

In dem Fall, daß ein Verdünnungstunnel 20 eingesetzt ist, dient die Durchflußmeßanordnung 21, 22, 23 zur Bestimmung der Verdünnungsrate an der Stelle 16, indem die von den Durchflußmessern 13, 21 gemessenen Durchflüsse miteinander verglichen werden.

Für den Vergleich der Normdurchflüsse und die Zuordnung der vom Analysengerät 3 ermittelten relativen Zusammensetzung des Abgases zu den Durchflüssen an den Durchflußmessern 13, 21 werden die Gaslaufzeiten zwischen den Meßstellen berücksichtigt, so daß in kurzen Abständen, von z. B. einer Sekunde, auch bei sich rasch veränderndem Betrieb des zu prüfenden Motors die jeweilige genaue Zusammensetzung des Abgases in absoluten Größen, z. B. Gewichtswerten, bestimmt werden kann.

## Patentansprüche

1. Verfahren zur Durchflußbestimmung von Abgasen, insbesondere von Abgasen von Kraftfahrzeugmotoren, bei dem das Abgas mit Umgebungsluft gemischt und der Durchfluß des aus Abgas und Umgebungsluft bestehenden ersten Mischgases mit einer einem Durchflußmesser enthaltenden ersten Durchflußmeßanordnung gemessen wird, **dadurch gekennzeichnet,** daß der Durchfluß der Umgebungsluft auf einen Wert eingestellt wird, der etwa gleich der unteren Meßbereichsgrenze des Durchflußmessers ist, und daß die Differenz der Durchflüsse des ersten Mischgases und der Grundluft gebildet wird.

2. Verfahren nach Anspruch 1, **dadurch gekennzeichnet**, daß der Durchfluß der Grundluft gemessen wird.

3. Verfahren nach Anspruch 1 oder 2, dadurch gekennzeichnet, daß der Grundluft-Durchfluß auf einen bekannten Wert konstant gehalten wird.

4. Verfahren nach einem der Ansprüche 1 bis 3, dadurch **gekennzeichnet**, daß dem ersten Mischgas über eine Belüftungsleitung (17) Umgebungsluft zugemischt wird und das so gebildete zweite Mischgas abgepumpt wird.

5. Verfahren nach Anspruch 4, **dadurch gekennzeich**net, daß der Durchfluß des zweiten Mischgas gemessen wird.

6. Verfahren nach einem der Ansprüche 1 bis 5, dadurch **gekennzeichnet**, daß das Abgas und das erste Mischgas beheizt werden.

7. Verfahren nach einem der Ansprüche 4 bis 6, dadurch **gekennzeichnet**, daß die Belüftungsleitung (17) gesperrt, die Durchflüsse des ersten und des zweiten Mischgases gemessen und die Meßergebnisse auf Übereinstimmung geprüft werden.

## Claims

1. Method for determining the through-flow of exhaust gases, in particular of exhaust gases of motor vehicle engines, wherein the exhaust gas is mixed with surrounding air and the through-flow of the first mixed gas, which consists of exhaust gas and surrounding air, is measured with a first through-flow meter arrangement which contains a through-flow meter, characterised in that the through-flow of the surrounding air is adjusted to a value which is substantially equal to the lower measurement range limit of the through-flow meter and in that the difference between the through-flow of the first mixed gas and the through-flow of the ambient air is established.

2. Method according to claim 1, characterised in that the through-flow of the ambient air is measured.

3. Method according to claim 1 or 2, characterised in that the ambient air through-flow is kept constant at a known value.

4. Method according to one of the claims 1 to 3, characterised in that surrounding air is admixed with the first mixed gas by way of a ventilation line (17) and the second mixed gas formed in this way is pumped out.

5. Method according to claim 4, characterised in that the through-flow of the second mixed gas is measured.

6. Method according to one of the claims 1 to 5, characterised in that the exhaust gas and the first mixed gas are heated.

7. Method according to one of the claims 4 to 6, characterised in that the ventilation line (17) is closed, the through-flow of the first mixed gas and the through-flow of the second mixed gases are measured and the measurement results are tested for consistency.

## Revendications

1. Procédé de détermination du débit de gaz d'échappement, notamment de gaz d'échappement de moteurs de véhicules automobiles, selon lequel le gaz d'échappement est mélangé à l'air ambiant et le débit du premier gaz mixte formé par le gaz d'échappement et l'air ambiant, est mesuré au moyen d'un premier dispositif de mesure de débit contenant un débitmètre, caractérisé par le fait que le débit de l'air ambiant est réglé à une valeur qui est égale approximativement à la limite inférieure de la gamme de mesure du débitmètre et que la différence entre les débits du premier gaz mixte et de l'air de base est formée.

2. Procédé suivant la revendication 1, caractérisé par le fait que le débit de l'air de base est mesuré.

3. Procédé suivant la revendication 1 ou 2, caractérisé par le fait que le débit de l'air de base est maintenu à une valeur connue constante.

4. Procédé suivant l'une des revendications 1 à 3, caractérisé par le fait que de l'air ambiant est ajouté en mélange au premier gaz mixte par l'intermédiaire d'une canalisation d'aération (17) et que le second gaz mixte ainsi formé est évacué par pompage.

5. Procédé suivant la revendication 4, caractérisé par le fait que le débit du second gaz mixte est mesuré.

6. Procédé suivant l'une des revendications 1 à 5, caractérisé par le fait que le gaz d'échappement et le premier gaz mixte sont chauffés.

7. Procédé suivant l'une des revendications 4 à 6, caractérisé par le fait que la canalisation d'aération (17) est bloquée, les débits des premier et second gaz mixtes sont mesurés et les résultats de mesure sont contrôlés pour déterminer s'ils coïncident.
